# EUROPÄISCHE PATENTSCHRIFT

(11) **EP 1 892 595 B1**
(45) Veröffentlichungstag und Bekanntmachung des Hinweises auf die Patenterteilung: **06.05.2009**
(21) Anmeldenummer: 07120843.3
(22) Anmeldetag: 11.12.2003
(51) Int. Cl.: G05B 19/042, G05B 19/418

(54) **Verfahren zum Einrichten eines Steuerungssystems einer Druckmaschine mit mehreren Aggregaten**
Method for setting up a control system of a printing press with a plurality of aggregates
Procédé de réglage d'un système de commande d'une presse dotée de plusieurs agrégats

(30) Priorität: 16.12.2002 DE 10258704; 14.04.2003 DE 10317065
(43) Veröffentlichungstag der Anmeldung: 27.02.2008
(62) Teilanmeldung aus: 03788876.5
(73) Patentinhaber: Koenig & Bauer AG, 97080 Würzburg (DE)
(72) Erfinder: Czotscher, Andreas, 97199 Ochsenfurt (DE); Geiger, Helmut, 97204 Höchberg (DE); Giesel, Stefan, 97783 Karsbach (DE); Hüller, Thomas, 97753 Karlstadt (DE); Mees, Jürgen, 97273 Kürnach (DE); Rath, Armin, 97250 Erlabrunn (DE); Römling, Mirko, 97209 Veitshöchheim (DE)

(56) Entgegenhaltungen:
- EP-A- 0 543 281
- DE-A1- 3 707 866
- DE-A1- 3 914 238
- DE-A1- 10 038 552
- DE-A1- 10 101 745
- DE-A1- 19 740 974
- DE-A1- 19 945 686

## Beschreibung

Die Erfindung betrifft ein Verfahren zum Einrichten eines Steuerungssystems einer Druckmaschine mit mehreren Aggregaten gemäß dem Oberbegriff des Anspruchs 1.

Die DE 37 07 866 A1 offenbart eine Steuerung mehrerer Aggregate einer Druckmaschine, wobei Messwerte an den Aggregaten einer Recheneinheit zugeführt werden, diese in einer Speichereinheit abgelegt und an einem taktilen Bildschirm sichtbar gemacht werden. Über den taktilen Bildschirm und die Recheneinheit wird die direkte Steuerung der Aggregate ermöglicht.

Aus der Zeitschrift "Siemens Energie & Automation 8 (1986) Heft 2", Seite 119 und 120 ist ein digitales System zum Regeln und Steuern von Stromrichtern und Antrieben bekannt, wobei ein Regel- und Steuergerät über eine Projektierungssoftware projektiert statt Programmiert wird. Die projektierten Regel- und Steuerfunktionen dieses einen Reglers werden in einen Listencode übersetzt, das Anwenderprogramm wird zusammen mit der Systemsoftware auf dem Regel- und Steuergerät abgearbeitet. Der Regler wird mit in einer strukturbildorientierten Projektierungssprache aus benötigten Hardware- und Software-Komponenten projektiert (Seite 121 bis 123).

In der o. g. Zeitschrift, auf Seite 112 bis 115 ist ein System zum schnellen digitalen Regeln und Steuern von Stromrichterantrieben offenbart, wobei die Hard- und Software in modularen Strukturen (Seite 116 bis 118) aufgebaut ist.

Die DE 197 40 974 A1 offenbart ein Buchfertigungssystem mit einem eine Objektstruktur aufweisenden Programm und einem Speicher, in welchem u. a. Informationen über in der Anlage befindliche Maschinen sowie Einstellarameter gespeichert sind. Zur Fertigung eines bestimmten Produktes werden durch das Programm anhand der in der Datenbank gespeicherten Daten die für dieses Produkt bestimmten Einstellparameter an die Steuerungen der Maschinen ausgegeben.

In der DE 100 38 552 A1 ist ein System zur Übertragung von OPC-Daten über Internet auf einen OPC-Server eines Automatisierungssystems bekannt.

Ein Artikel von Wolfgang Weber, "Verteilte Systeme - Verteilte Objekte - DCOM", Seminar Datenverarbeitung WS 1998/99 der Ruhruniversität Bochum, Lehrstuhl für Datenverarbeitung, beschäftigt sich mit dem Einsatz von DCOM-Laufzeitsystemen bei der Kommunikation zwischen mehreren verschiedenen Rechnern und Prozessen.

Im Artikel "Useware in der Praxis: Die DlCOweb Bedienung - ein Beispiel für eine ergonomische Gestaltung in der Drucktechnik", Gregor Enke, 44 (2002) Heft 9 atp, wird ein Bedienkonzept einer Druckmaschine vorgestellt. Das Konzept sieht eine handlungsorientierte Bedienung bei der Produktionsvorbereitung und der Beeinflussung von Prozessgrößen vor.

Die DE 199 45 686 A betrifft eine Vorrichtung zur Steuerung einer Anlage zur Herstellung von Keramikprodukten, wobei den Anlagenteilen ein gemeinsames Steuersystem zugeordnet ist. In einem als Anlagenmuster dienenden Server-Rechner sind manuell oder mittels eines Datenträgers Produktdaten eingebbar, welche an die übrigen Anlagenteile weitergeleitet und auch dort gespeichert werden.

In der DE 101 01 745 A1 ist ein Verfahren zum Betreiben eines Automatisierungssystems offenbart, wobei in einer Informationsdatei abgelegt wird, welche speziellen Dienstprogramme für welche Baugruppen notwendig sind. Die Dienstprogramme können hierbei mehrfach für mehrere Baugruppen genutzt werden, was die Anzahl der insgesamt im Betriebssystem zu implementierenden Dienstprogramme verringert.

Der Erfindung liegt die Aufgabe zugrunde, ein Verfahren zum Einrichten eines Steuerungssystems einer Druckmaschine mit mehreren Aggregaten zu schaffen.

Die Aufgabe wird erfindungsgemäß durch die Merkmale des Anspruchs 1 gelöst.

Die mit der Erfindung erzielbaren Vorteile bestehen insbesondere darin, dass zum einen die Architektur der Steuerung in der Weise dezentralisiert aufgebaut ist, dass sie einen modularen und flexiblen Aufbau bzw. Ausbau der Verarbeitungsmaschine unterstützt.

Gleichzeitig liegt eine zentralisierte Datenverwaltung vor, welche in ihrer Struktur der vorliegenden Konfiguration der Verarbeitungsmaschine nachempfunden ist bzw. diese widerspiegelt, was ein einfaches, zentrales Konfigurieren über verteilte Systeme hinweg ermöglicht.

Die zentrale Datenverwaltung und/oder die Architektur der Steuerung bilden ein skalierbares System. Die einzelnen Prozesse zur Verarbeitung von Daten sind so beliebig auf einem einzigen Rechner oder über mehrere Rechner hinweg skalierbar, je nach Anwendungsfall und/oder Auslastung. Daher deckt das System, insbesondere die Soft- und Hardware, ein großes Spektrum verschiedener Maschinentypen und -größen (z. B. Druckmaschinen für Zeitung, Akzidenz, Bogen, Wertpapier etc.) ab. Die Software bzw. der Datenbestand der Steuerung wird je nach Anwendungsfall, z. B. aus vordefinierten Modulen und Datenbelegung, konfiguriert, insbesondere projektiert. Ein gesondertes Programmieren von Daten jeder einzelnen Konfiguration kann entfallen, es erfolgt lediglich ein Projektieren der Steuerung entsprechend der Anlage mit vorbekannten Komponenten. Die modulare Architektur und die Art der Planung und Implementierung sind vorteilhaft auf Anlagen mit mehreren Sektionen erweiterbar.

In Bezug auf die Variabilität und die flexible Anwendung für verschiedenste Maschinenausführungen ist auch die standardisierte, nahezu automatisierte Einrichtung des Steuerungssystems, insbesondere des Datenspeichers, von Vorteil. Der bis auf einen weitgehend für verschiedene Maschinenausführungen identische Programmteil des Datenservers bildet auf der Grundlage eines die Anlage beschreibenden Datensatzes erst die maschinenspezifische Datenstruktur im Datenserver aus, d. h. durch den Datensatz erhält der Datenserver (z. B. über dessen zuvor "leere" Speicherteil) erst seine Identität bzgl. der zu steuernden Anlage und wird entsprechend eingerichtet. Diesem Einrichten der Grundstruktur kann sich dann im späteren Betrieb beim Bedienen der Anlage ein Abändern von angelegten Parametervorgaben und/oder ein Aktivieren oder Deaktivieren von grundsätzlich vorgesehenen Komponenten bzw. Aggregaten anschließen. Im folgenden wird unterschieden zwischen dem Implementieren (d. h. daten- bzw. softwaremäßigen Konfigurieren) der maschinenspezifischen Datenstruktur in die Steuerung und einer beim Bedienen der Anlage vorzunehmenden Anpassung an das zu produzierende Produkt, welche im Stand der Technik z. T. ebenfalls mit "Konfigurieren" oder "Einrichten" bezeichnet werden. Leitstandsrechner bzw. deren Datenspeicher weisen z.B. beim Auslieferungsstand der Anlage einen fest programmierten Namensraum auf, während beim vorliegenden System ein frei konfigurierbarer Namensraum vorliegt, dessen Datenstruktur - z.B. durch Implementieren des Konfigfiles - erst angelegt wird. Der Datenserver wiest hierzu auf der einen Seite einen Prozess und auf der anderen Seite das die Anlage charakterisierende Konfigfile auf.

In einer vorteilhaften Ausgestaltung des Leitstandes, weist dieser ein Bedienpult auf, welches es dem Bediener ermöglicht die Farben der aktuellen Seite zu erkennen und zu ändern. In Weiterbildung sind Werte für die Regelung und Steuerung der Maschine über ein touchscreenfähiges Anzeigefeld am Bildschirm direkt veränder- bzw. eingebbar.

Ausführungsbeispiele der Erfindung sind in den Zeichnungen dargestellt und werden im folgenden näher beschrieben.

Es zeigen:
- Fig. 1: eine schematische Anlage mit Steuereinrichtung;
- Fig. 2: eine schematische Darstellung für die Projektierung einer Anlage;
- Fig. 3: eine schematische Darstellung für die Architektur der Steuereinrichtung;
- Fig. 4: eine schematische Darstellung für die Architektur in einer Mehrsektionenanlage.

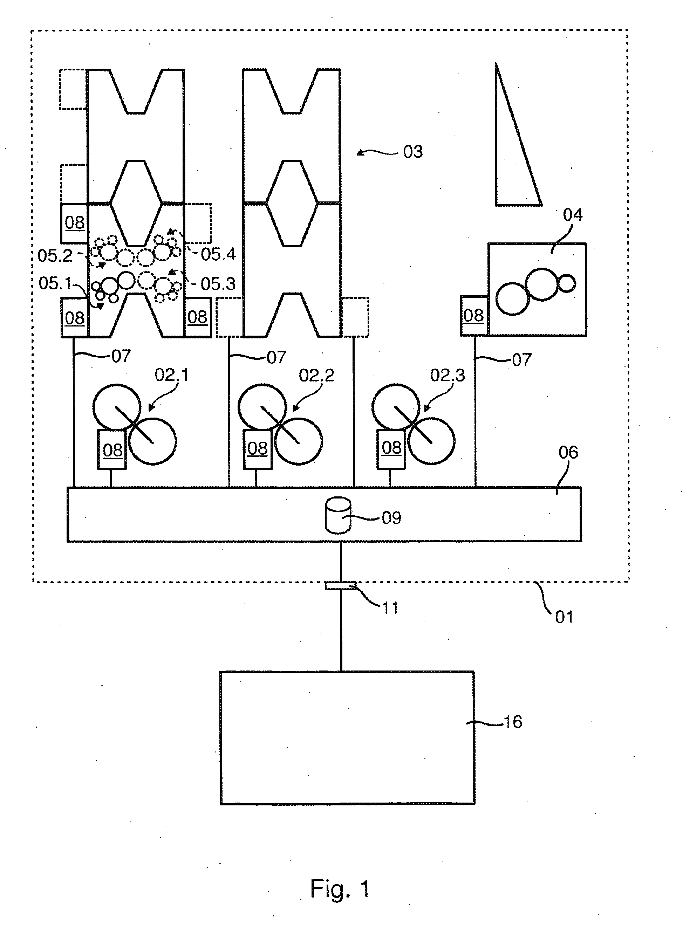

Eine Anlage 01, beispielsweise wie in Fig. 1 dargestellt eine Druckmaschine 01 oder Druckmaschinenanlage 01, weist eine Anzahl von Aggregaten 02; 03; 04, beispielsweise Anlagenteile zur Ausführung bestimmter Verfahrensschritte, wie Materialzuführung 02 (z. B. ein Rollenwechsler 02 oder mehrere Rollenwechsler 02.1; 02.2; 02.3 etc.), Druckeinheiten bzw. -türme 03, Aggregate zur Weiterverarbeitung 04, wie Falzapparate 04 etc., auf. Die Druckeinheiten 03 können wiederum mehrere untergeordnete Aggregate 05, z. B. Druckwerke 05, z. B. bezeichnet mit 05.1; 05.2; 05.3; 05.4 etc., aufweisen. Die verschiedenen Aggregate 02; 03; 04; 05 können jeweils einmal oder mehrmals in der Anlage vorgesehen sein. Für verschiedene Ausführungen der Anlage können Anzahl und/oder Ausprägung der Aggregate 02; 03; 04; 05 unterschiedlich sein.

Des weiteren weist die Anlage 01 ein symbolisch dargestelltes Steuerungssystem 06 auf, welches die Aggregate 02; 03; 04; 05, bzw. deren Antriebe, Einstellungen bzw., für sich und im Zusammenspiel zueinander steuert. Das symbolisch dargestellte Steuerungssystem 06 beinhaltet u.a. wie unten näher ausgeführt verschiedene Elemente wie ein oder mehrere Datenspeicher, ein oder mehrere Recheneinheiten sowie Signalverbindungen zwischen den Elementen, wie z. B. Datenbusse und/oder Protokollumsetzer. Das Steuerungssystem 06 steht beispielsweise über Verbindungen 07 mit den Aggregaten 02; 03; 04; 05 bzw. falls vorhanden, mit diesen zugeordneten Steuerungen 08 und/oder Regelungen 08 in Signalverbindung.

Je nach Art, Ausführung bzw. Anwendung ist eine derartige Anlage 01 bzgl. ihrer Aggregate 02; 03; 04; 05, der jeweiligen Anzahl der Aggregate und/oder der näheren Spezifikation der Aggregate selbst hardwaremäßig unterschiedlich konfiguriert. D.h., es handelt sich z. B. um eine Akzidenzdruckmaschine mit einer gewissen Anzahl von Rollenwechslern (eines bestimmten Typs), einer bestimmten Anzahl von Druckwerken horizontaler Ausrichtung (eines bestimmten Typs), einen Falzapparat (eines bestimmten Typs) etc. Unter Konfigurierung der Anlage 01 soll hier im hardwaremäßigen Zusammenhang die tatsächliche Ausprägung der Anlage 01, die Ausstattung mit tatsächlich vorhandenen Aggregate 02; 03; 04; 05 und ggf. deren Ausprägung verstanden sein.

Informationen über eine derartige Konfigurierung der gesamten, tatsächlich vorliegenden Anlage 01 sind mit entsprechenden Daten zentral im Steuerungssystem 06 abgelegt. Die Daten sind vorzugsweise zentral in einer zentralisierten Datenverwaltung 09, z. B. einem Datenspeicher 09 oder Datenserver 09, abgelegt. Diese Daten (zur Konfigurierung der Anlage) sind in vorteilhafter Ausführung über mindestens eine Eingabe-Schnittstelle 11 implementier- und/oder auch veränderbar. In einer vorteilhaften Ausführung werden die Daten zur Konfigurierung der Anlage als Datensatz F (z. B. File F, insbesondere Konfigurationsfile F) mittels einer vom Steuerungssystem 06 unabhängigen Datenverarbeitungseinheit 16, z. B. einen Computer 16, erstellt, und nach Fertigstellung über die Eingabe-Schnittstelle 11 auf die zentralisierte Datenverwaltung 09 übertragen bzw. dort implementiert. Die Erstellung des Konfigurationsfiles F dient dem steuerungstechnischen Abbilden der tatsächlichen Anlagenkonfiguration und soll im Folgenden als "Projektieren" des Steuerungssystems 06 im Hinblick auf die tatsächlich vorhandene Anlage 01 bzw. deren Aggregate 02; 03; 04; 05 verstanden werden. Die Übertragung des Files F kann beispielsweise auch über ein Netzwerk, z. B. über Internet vom Hersteller aus, erfolgen. Das Steuerungssystem 06 kann jedoch auch eigene Mittel zur Projektierung des Steuerungssystems 06 bzw. Erstellung des Datensatzes F aufweisen, welche z. B. im wesentlichen denen der unten näher ausgeführten Datenbank und/oder Oberfläche entspricht.

Die Abbildung der Konfiguration in einem Konfigurationsfile F, d. h. die Projektierung der Steuerung, erfolgt in vorteilhafter Ausführung unter Verwendung einer Speichereinheit 17, insbesondere Datenbank 17, mit einem Vorrat an vorbekannten bzw. vordefinierten Objekten 12; 13; 14, welche z. B. Druckmaschinentypen, und/oder Ausführungen o. g. Aggregate 02; 03; 04; 05 zugeordnet sind. Die Anlage 01, z. B. Druckmaschine 01, wird dann in der Weise projektiert, dass diese aus dem Vorrat vordefinierter Objekte 12; 13; 14 (z. B. Drucktürme, Rollenwechsler, Faltapparate etc.) zusammengestellt wird, wobei diesen Objekten 12; 13; 14 die zum späteren Betrieb der Anlage 01 erforderlichen Daten (zumindest Grunddaten), Eigenschaften und/oder Unterprogramme zugeordnet sind bzw. durch Anwahl zugewiesen werden. Diese spezifischen Daten und Unterprogramme liegen beispielsweise in der Datenbank 17 vor und sind mit dem jeweiligen Objekt 12; 13; 14 verknüpft. Zumindest komplexere Objekte 12; 13; 14 verfügen über die Möglichkeit einer weiteren Detaillierung, in dem, beispielsweise in der Art einer Baum- oder Verzeichnisstruktur, dem Objekt 12; 13; 14 in einer tiefer liegenden Ebene untergeordnete Objekte 13.1; 13.2, z. B spezifische Varianten, spezifische Ausstattungen, Detaillierungen, spezifische Einstellungen etc., hier für das Beispiel einer "Druckeinheit1 ", "Druckwerk1" und "Druckwerk2", zugeordnet werden.

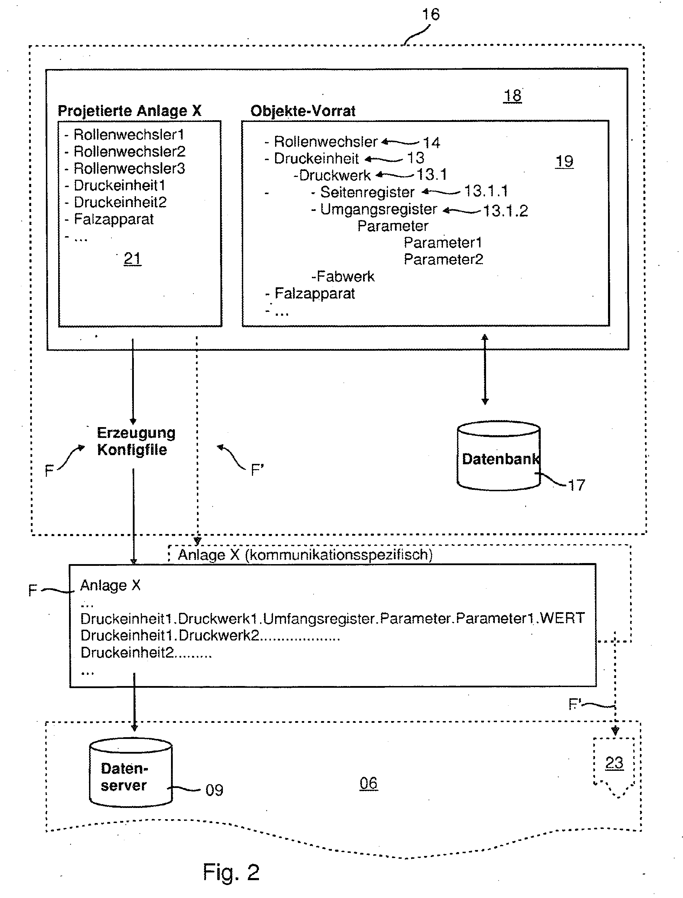

Die weiteren Detaillierungen können in mehr als einer tiefer liegenden Ebene in Baumstruktur wie in Fig. 2 für das Beispiel der Druckeinheit 03 mit "Seitenregister" und "Umfangsregister" als 13.2.1 13.2.2 dargestellt, vorliegen. Eine weitere nicht mehr bezeichnete Ebenen stellt beispielsweise "Parameter" mit nochmals darunter liegenden "Parameter1" und "Parameter2" dar. All diesen Spezifikationen sind in der Datenbank 17 Grunddaten und/oder Unterprogramme zugeordnet, welche bei Anwahl des entsprechenden Objektes 12; 13; 14 (mit Unterspezifikationen, untergeordneten Objekten etc.) in eine Datei F übernommen werden. Daten bzw. letztlich gewählte Parameter können für verschiedene Aggregate 02; 03; 04; 05 derselben Art verschieden gewählt bzw. durch Eingabe vorgegeben werden. Wie in Fig. 2 exemplarisch dargestellt, weist die (softwaretechnisch) zu projektierende Anlage 01 drei Rollenwechsler 02, zwei Druckeinheiten 03 sowie einen Falzapparat 04 auf, wobei für jedes Aggregat 02; 03; 04; 05 die schematisch auf der rechten Bildseite dargestellten Parameter aus dem Objekte-Vorrat 19 zugeordnet wurden. Nach Anwahl der für die Anlage 01 vorgesehenen Komponenten / Objekte, werden alle zugeordneten Daten (Parameter) / Unterprogramme nach einem vordefinierten Muster in eine Datei F oder ein File F (z. B. ein "Konfigfile" F) übernommen. Dieser Datensatz F stellt dann ein Abbild der tatsächlich zu betreibenden Anlage 01 dar und weist dann beispielsweise hierfür sämtliche für den Betrieb und die Steuerung wesentlichen Voreinstellwerte, Sollwertvorgaben etc. auf und kann im Text- oder Binär-Format vorliegen.

Die Projektierung wird in vorteilhafter Ausführung auf der vom Steuerungssystem 06 unabhängigen bzw. trennbaren Datenverarbeitungseinheit 16, z. B. auf einem Computer 16, vorgenommen. Hierzu ist eine Ausführung von Vorteil, wobei eine Programmoberfläche 18 eine Verknüpfung zur o. g. Datenbank 17 in der Weise aufweist, dass eine Anwahl bzw. Kopie eines Objektes 12; 13; 14 (bzw. dessen Bezeichnung oder Namen) die spezifischen Daten bzw. Parameter und/oder Unterprogramme und/oder Unterobjekte 13.1; 13.2 (im weiteren auch Prozessvariablen 12; 13; 14; 13.1; 13.2; 13.2.1; 13.2.2) mit führt -vergleichbar mit dem Einbetten eines OLE-Objektes. Besonders komfortabel ist eine Ausführung der Programmoberfläche, mittels welcher in einem Objekte-Vorrat 19 angebotene Objekte 12; 13; 14 in Baumstruktur durch Anwahl weiter differenzierbar sind, und die Objekte 12; 13; 14 bzw. die detaillierteren Objekte 13.1; 13.2 durch Kopie, insbesondere "Drag & Drop", der zu projektierenden Anlage in Form eines eigenen Bildschirmbereichs 21 zugeführt werden können. Im Hintergrund dieser Operation oder abschließend werden die diesen Objekten 12; 13; 14 mit untergeordneten Objekten 13.1; 13.2 etc. zugeordneten Daten und Prozeduren - z. B. in einem vorzugebenden Standardformat - in die Datei F kopiert. Das auf der Basis der ausgewählten Prozessvariablen 12; 13; 14; 13.1; 13.2; 13.2.1; 13.2.2 erzeugte File F kann nun nach Fertigstellung dem Steuerungssystem 06 der Anlage 01, insbesondere dem Datenserver 09, zugeführt werden. Es beinhaltet beispielsweise als Variablen vom Anwender vergebene - und vorzugsweise standardisierte - Anwendernamen.

Dem Datenspeicher 09 ist vorteilhaft zum einen ein Datenverarbeitungsprozess (bzw. - routine) implementiert, welcher u. a. dazu ausgebildet ist, eine Datenstruktur anhand ihm zum anderen vorliegenden Projektierungsdaten auszubilden. Im vorliegenden Fall liegt dem Datenspeicher 09 das ihm übertragene Konfigurationsfile F vor, anhand dessen eine auf die durch das File F abgebildete Anlage 01 maßgeschneiderte softwaremäßige Konfigurierung (Einrichtung) des Speichers erfolgt. D. h. es wird nach Übertragung des Konfigurationsfiles F im Datenspeicher 09 erst eine an die Anlage 01 angepasste Datenstruktur geschaffen und nicht eine bereits fest programmierte Speicherumgebung offener Parameter lediglich mit Daten gefüllt. Eine derartig fest programmierte Speicherumgebung müsste für jeden Maschinentyp und/oder jede stärker abweichende hardwaremäßige Konfigurierung einer Anlage 01 weitgehend individuell programmiert werden. Durch die vorteilhafte Ausführung des Datenspeichers 09 mit einander zugeordnetem Datenverarbeitungsprozess und Konfigurationsfile F ist die maßgeschneiderte Ausbildung der Datenstruktur und letztlich des Steuerungssystems 06 in einfacher Weise möglich. Nach fest vorgegebenen Routinen des Datenverarbeitungsprozesses wird die tatsächliche Anlage 01 anhand des Files F (Prozessvariablen 12; 13; 14; 13.1; 13.2; 13.2.1; 13.2.2) im Datenspeicher 09 bzw. im Steuerungssystem 06 abgebildet. Die Daten- und Programmstruktur als System des Datenspeichers 09 wird als solches somit erst gebildet.

Vorteil dieser zweigeteilten Lösung ist es, dass mit den Routinen der Datenverarbeitungsprozesse auf der einen Seite Vorgehensweisen, Handlungen, Verhaltensweisen und/oder logische Zusammenhänge für die softwaremäßige Einrichtung und übergeordneten Steuerungsprozesse eingerichtet sind und die Konfigurationsdaten des Files F auf der anderen Seite die Komponenten und Subroutinen der tatsächlich vorliegenden Anlage 01 definieren. So sind Änderungen oder Fehlerbehebung in der "Hardware" allein durch Implementierung eines neuen Files F, und Verbesserungen oder Fehlerbehebung der Datenverarbeitungsprozesse allein durch Implementierung eines Teils oder des gesamten Datenverarbeitungsprozesses erzielbar. So ist beispielsweise im Fall eines zusätzlichen oder Austauschaggregates anderen Typs lediglich ein neues Konfigfile F für die neue Anlage 01 unter Berücksichtigung dieser Änderung einzulesen, der Programmteil des Datenservers 09 erkennt die abgebildete Anlage 01 und richtet seinen Speicherbereich und ggf. andere Komponenten des Steuerungssystems 06 entsprechend ein. Es muss hierbei keine Änderung in den Programmquellcodes im Hinblick auf Parametrisierung, Routinen etc. erfolgen. Der Programmteil (Datenverarbeitungsprozesse) ist in der Weise ausgebildet, dass die Datenstruktur und die Funktionalität der Anlage 01 für unterschiedlichste Maschinentypen allein anhand des zur Verfügung gestellten Konfigfiles F gebildet wird.

Die beschriebene Projektierung geht weit über die herkömmliche Programmierung eines Leitstandsrechners oder Sektionsrechner hinaus, in welchem zwar ebenfalls die Anlage 01 softwaremäßig abgebildet ist, die Routinen und die die Parametrierung enthaltenden Programmquellcodes jedoch eng an die Maschine angepasst fest in der entsprechenden Recheneinheit einprogrammiert sind. Über eine Bedienerschnittstelle ist dann die Anlage 01 bedienbar, d. h. es sind dann üblicherweise bereits angelegte mögliche Komponenten softwaremäßig ein- und ausschaltbar, Parameter veränderbar etc. Dies wird im Stand der Technik z. T. ebenfalls als "Konfigurieren der Anlage 01" bezeichnet, meint jedoch die Auswahl von im Programm bereits fest vorgegebenen Komponenten und/oder Parametern und nicht die "softwaremäßige Konfigurierung" des Datenservers 09 bzw. des Steuerungssystems 06 in der hier mit "Projektierung" bezeichneten Weise. Im Unterschied zum o.g. "Konfigurieren der Anlage 01 ", bei welcher in einer fest vorgegebenen Datenstruktur die Betriebsdaten ausgewählt und somit "konfiguriert" werden, wird bei vorliegender Verfahrensweise die Datenstruktur des Datenservers 09 selbst konfiguriert, d.h. der Datenserver 09 selbst ist konfigurierbar (Projektierbar) ausgeführt. Das Projektieren ist als Abbilden der tatsächlich vorhandenen Aggregate - und zwar nur dieser - in einer entsprechenden Datenstruktur zu verstehen.

Selbstverständlich ist es in vorteilhafter Ausführung vorgesehen, dass nach Projektierung und Implementierung des Files F das Bedienpersonal über eine Leitebene 41 (s.u.) und/oder ein teil- oder vollautomatisiertes System (wie z. B. Produktplanungssystem) über eine Schnittstelle 15 implementierte Aggregate weg- oder zuschalten bzw. Parameterwerte ändern kann, also eine sog. "Konfigurierung der Anlage 01" im o.g. Sinne aus den nun im Datenserver 09 angelegten Aggregaten vornehmen kann.

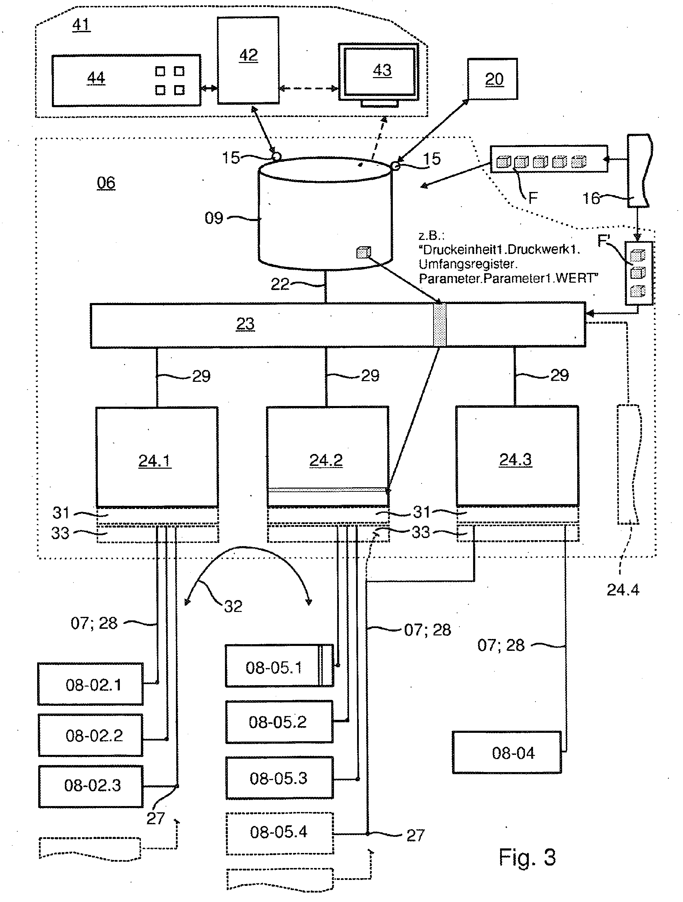

In einer vorteilhaften Weiterbildung werden bei der Projektierung der Anlage 01 aus dem Objekte-Vorrat auch kommunikationsspezifische Informationen (z. B. verwendete Schnittstellenprotokolle) zu den Aggregaten 02; 03; 04; 05 und ggf. zu den verwendeten Hardware-Komponenten des Steuerungssystems 06 ausgelesen. Diese Daten können in einer ersten Variante mit in das Konfigfile F eingebunden sein, dem Datenserver 09 mit implementiert werde, und von dort einem unten näher bezeichneten Kommunikationsserver 23 zu dessen "softwaremäßiger Konfigurierung" zugestellt werden. In einer in Fig. 2 und 3 strichliiert angedeuteten Ausführung wird zur softwaremäßigen Konfigurierung des Kommunikationsservers 23 bei der Projektierung jedoch mindestens ein zweites File F', z.B. Konfigurationsfile F' - kurz: Konfigfile F', erstellt, welches entweder über den Datenserver 09 indirekt oder aber über eine nicht dargestellte Schnittstelle des Kommunikationsservers 23 diesem direkt implementiert wird. Diesem liegen dann die kommunikationsspezifischen Informationen über die projektierten Aggregate 02; 03; 04; 05 vor.

Mit der beschriebenen Verfahrensweise und Ausbildung zur Einrichtung des Steuerungssystems 06 wird eine Systematik weg von einer Unikatfertigung geschaffen, welche einfach und fehlerarm für verschiedenste Produkte eines Herstellers der Anlage 01 , z. B. verschiedenste Typen, Baureihen und Ausbau- bzw. Ausstattungsstufen einsetzbar ist. Die das Steuerungssystem 06 anhand der geplanten Anlage 01 projektierende Person muss keine detaillierte, auf die Anlage 01 maßgeschneiderte Programmierung mehr vornehmen, sondern bildet lediglich die Komponenten bzw. Aggregate 02; 03; 04; 05 der Anlage 01 ab. Die Programmierung erfolgt durch die Übernahme der Daten über den Objekte-Vorrat 19, die Implementierung im Datenserver 09 sowie durch den für verschiedene Typen, Baureihen und/oder Ausbau- bzw. Ausstattungsstufen im wesentlichen gleichbleibenden Programmteil des Datenservers 09.

Der Datenspeicher 09 ist vorteilhaft als Datenserver 09 mit offener Schnittstelle, insbesondere als Datenserver 09 (OPC-Datenserver) mit mindestens einer offenen OPC-Schnittstelle 15 zum Datenaustausch auf der Basis OLE/COM und DCOM ausgebildet. Der Datenspeicher 09 verwaltet die Objekte bzw. Prozessvariablen 12; 13; 14; 13.1; 13.2; 13.2.1 13.2.2 auf der Basis einer Objektverwaltung z. B. gemäß dem COM (Component Object Model) / DCOM (Distributed Component Object Model) - Standard. Dies bedeutet, er weist ein Betriebssystem auf, welches eine Methode zur Interprozesskommunikation (Objektanforderungs-Vermittler) unterstützt, die dazu ausgebildet ist komplexe Datenstrukturen auszutauschen. Im Beispiel ist als Betriebssystem Windows NT4.0^{©} (oder höher) oder Windows 2000^{©} (oder höher) und als Standart für die Kommunikation COM/DCOM vorgesehen. Es kann jedoch auch eine vergleichbare, die o. g. Bedingungen erfüllende Kombination aus Betriebsystem und Objektanforderungs-Vermittler, z. B. um das Betriebsystem LINUX^{©} und den Standart CORBA^{©} handeln. Dies gilt gleichbedeutend auch für die nachfolgend beschriebenen Elemente, für welche die Verwendung von Windows 2000^{©} i. V. m. COM/DCOM als vorteilhaft oder als Bedingung genannt ist.

Über die offene Schnittstelle 15 können die Daten nach dem Datenaustauschverfahren OLE (Object Linking and Embedding) beispielsweise mit einem Netzwerk, Feldbus, einer Applikation und/oder einer Visualisierung ausgetauscht werden. Die mindestens eine offene OPC-Schnittstelle 15 ermöglicht einen Zugriff durch ein weiteres externes Aggregat 20, Modul 20 oder Applikation 20 (z. B. eines Trockners, einer Druckvorstufe und/oder einer Rollenversorgung etc.), im folgenden "Verbraucher", indem dies angeschlossen wird mit dem Datenserver 09 verbunden wird. Der zusätzliche Verbraucher "bedient sich" selbstständig mit den Daten aus dem Datenserver 09.

Die Objekte bzw. Prozessvariablen 12; 13; 14; 13.1; 13.2; 13.2.1; 13.2.2 werden vom Datenserver 09 in einem Namensraum abgebildet und verwaltet. Die Verwaltung kann u. a. Speichern, Archivieren und Rekonstruieren von Prozessdaten und -variablen 12; 13; 14; 13.1; 13.2; 13.2.1; 13.2.2 enthalten. Der Namensraum ist nun entsprechend der projektierten Anlage 01, insbesondere wieder in Baumstruktur, spezifisch konfiguriert. Der Datenserver 09 kann zusätzlich dazu ausgebildet sein, dass bei der Steuerung und/oder Regelung der Anlage 01 erkannte Fehler in eine Datei, z. B. ein sog. Logfile eingetragen werden.

Der Datenserver 09 ist in einer vorteilhafter Ausführung in eine nachfolgend dargelegte Architektur für das Steuerungssystem 06 eingebunden (Fig. 3):

Der Datenserver 09 ist über eine weitere Schnittstelle und eine Signalverbindung 22, z. B. ein Netzwerk 22, mit mindestens einer Prozess- oder Recheneinheit 23, z. B. einem Server 23, insbesondere einem Kommunikationsserver 23, verbunden. Die Prozess- oder Recheneinheit 23 stellt bzgl. des Steuerungssystems 06 mit dezentralen Komponenten (z. B. untergeordnete Prozesse 24 und/oder Steuerungen 08, s. u.) eine übergeordnete Prozess- oder Recheneinheit 23 dar. In ihr erfolgt in einem übergeordneten Prozess eine Konvertierung der vom Datenserver 09 bereitgestellten sog. Rohdaten in das jeweils für die untergeordneten Prozesse 24 und/oder Steuerungen 08 geforderte Kommunikationsprotokoll. Das Netzwerk 22 zwischen Datenserver 09 und übergeordneter Prozess- oder Recheneinheit 23 ist beispielsweise als Ethernet, z. B. mit einer Übertragungsrate von mindestens 10 Mbit/s, ausgebildet. Als "Netzwerk" wird hier sofern nichts anderes angegeben ist, ein hardwaretechnisch abgeschlossenes Netzwerk eines einheitlichen Netztyps verstanden. Als Zugriffsverfahren wird in vorteilhafter Ausführung ein stochastisches Zugriffsverfahren, insbesondere das nach IEEE 802.3 standardisierte CSMA/CD Zugriffsverfahren verwendet. Die Kommunikation kann prinzipiell auf unterschiedlichsten Protokollen, jedoch in einer vorteilhaften Ausgestaltung auf dem TCP/IP-Protokoll oder eine Socket-Verbindung basiert sein. Unter dem Kommunikationsserver 23 ist allgemein eine Prozesseinheit 23 zu verstehen, welche eine Vermittlungsschicht zwischen dem Server 23 und "darunter liegenden" netzwerkspezifischen Prozessen liegt. Der Server 23 fungiert hierbei z. B. als Client (OLE- bzw. COM/DCOM-Client), welcher Objekte bzw. Prozessvariablen 12; 13; 14; 13.1; 13.2; 13.2.1; 13.2.2 aus dem Datenserver 09 (OLE Server) aufnehmen kann. Er erhält und/oder verarbeitet die Objekte bzw. Prozessvariablen 12; 13; 14; 13.1; 13.2; 13.2.1; 13.2.2 ebenfalls auf der Basis einer Objektverwaltung gemäß dem COM / DCOM - Standard und ist maschinenspezifisch konfiguriert. Die maschinenspezifische Konfiguration erhält der Kommunikationsserver beispielsweise in der o.g. Weise über das Projektierte Konfigfile F'.

Der Server 23 bildet somit eine "Kommunikationsschicht" zwischen dem Datenserver 09 und "darunter liegenden" Clients. Diese können beispielsweise ein oder mehrere zu einem oder mehreren Netzwerken 28 zusammen gefasste Steuerungen 08 sein, welche z. B. über entsprechende Schnittstellen 27 oder Knoten 27 mit dem jeweiligen Netzwerk 28 bzw. Signalverbindung 28 verbunden sind. Der Server 23 baut z. B. eine direkte Signalverbindung (nicht dargestellt) zu diesen als Kommunikationspartner 08 dienenden Steuerungen 08 auf bzw. unterhält diese. Er interpretiert einerseits von der Steuerung 08 empfangene Daten bzw. Arbeitsaufträge ("Jobs") und übergibt diese Daten an den Datenserver 09. Anderseits konvertiert er zu sendende Daten aus dem Datenserver 09 in Jobs und sendet diese an die betreffende Steuerung 08. Die Steuerungen 08 können als auf PC laufende Programme, als SPS-Einheiten oder in anderer Weise ausgebildet sein. Der Job erhält durch den Server 23 beispielsweise im Kopf des entsprechenden Netzwerkprotokolls die Information über den vom Job betroffenen Knoten 27.

Die Signalverbindungen 28 sind vorteilhaft als ein oder mehrere Netzwerke 28 ausgebildet. Sie können sternförmig (wie dargestellt in Sterntopologie) zu den Steuerungen 08 führen oder aber (nicht dargestellt) in Bus- oder Ringstruktur jeweils mehrere Steuerungen 08 bedienen.

Das Netzwerk 28 ist vorteilhafter Weise als Netzwerk 28 mit deterministischem Zugriffsverfahren, insbesondere auf Token-Passing basierend, z. B. als Arcnet 28 ausgeführt. Der Server 23 ist in diesem Fall dazu ausgebildet, die Jobs in das verwendete Protokoll umzusetzen. Ist das Netzwerk 28 als Arcnet 28 ausgeführt, so ist der Kommunikationsserver 23 als Arcnet-Server ausgeführt. Die Verbindung 28 kann in einer vorteilhaften Variante auch als sog. "Profibussystem" ausgeführt sein.

Im Ausführungsbeispiel nach Fig. 3 steht der Server 23 nicht direkt, sondern vorteilhaft über mehrere untergeordnete Prozesse 24 oder Datenverarbeitungs- und/oder Recheneinheiten 24, hier dreien, mit den Steuerungen 08 in Signalverbindung. Die Prozesse 24 (oder auch Prozesseinheiten 24) können baulich wie dargestellt in getrennten Einheiten 24.1; 24.2; 24.3; 24.4 (d. h. in eigenen Prozessoren, insbesondere Kommunikationsprozessoren oder auch gar in eigenen Gehäusen bzw. Rechnern), oder aber in einem gemeinsamen Bauteil, z. B. Rechner, untergebracht sein. Die Prozesse 24 sind dazu ausgebildet, ein Netz eines bestimmten Typs zu bedienen und stellen sog. "Netzhandler" 24 dar. Die Netzhandler 24 sind austauschbar und können je nach zu bedienendem Netztyp (z. B. Profibus, Interbus-S oder Realtime Ethernet) ausgeführt sein. Es können auch Netzhandler 24 verschiedenen Typs gleichzeitig mit dem Server 23 verbunden sein. In Fig. 3 können beispielsweise die Netzhändler 24.1, 24.2, 24.3 als Arcnet-Handler ausgeführt sein, während ein zusätzlicher Netzhandler 24.4 beispielsweise einen anderen Netztyp und/oder ein anderes Protokoll unterstützt, um mit Aggregaten bzw. deren Steuerungen 08 auf Basis dieses Netztyps und/oder Protokolls zu kommunizieren.

Eine Verbindung 29 zwischen dem Server 23 und den untergeordneten Datenverarbeitungs- und/oder Recheneinheiten 24 ist z. B. als Netzwerk 29, hier in Sterntopologie, ausgeführt. Dem Server 23 ist z. B. die Information darüber implementiert, welcher Knoten 27 mit welcher untergeordneten Datenverarbeitungs- und/oder Recheneinheit 24 (Prozesse 24) in Signalverbindung 29 steht. Die Information wird dann, beispielsweise in der Art eines "Switch", dem betroffenen untergeordneten Prozess 24 zugestellt. In einer Variante werden die Informationen allen untergeordneten Prozessen 24 zugestellt, wobei eine Annahme und Weiterverarbeitung beispielsweise über die Identifikation im Protokollkopf entschieden wird. Die Information darüber, welche Steuerung 08 über welche untergeordnete Datenverarbeitungs- und/oder Recheneinheit 24 (Prozess 24) anzusprechen ist, kann hierbei in der untergeordneten Steuerung 08 selbst implementiert und veränderbar sein.

Im Beispiel ist das Netzwerk 28 zwischen der untergeordneten Datenverarbeitungs- und/oder Recheneinheit 24 und den verbundenen Steuerungen 08 als Netzwerk 28 in Sterntopologie ausgeführt. Die untergeordneten Datenverarbeitungs- und/oder Recheneinheit 24 sind z. B. als Server 24 mit COM / DCOM- Objektverwaltung ausgeführt. In Weiterbildung beinhaltet jeder Server 24 ein als Treiber 31 ausgebildetes Programm 31 bzw. Treibersoftware 31, welche das Betriebssystem NT4.0^{©} (oder höher) und/oder Windows 2000^{©} (oder höher) unterstützt. Somit wird in allen Ebenen eine objektorientierte Verarbeitung mit COM / DCOM- Objektverwaltung ermöglicht. (entsprechend o. g.: LINUX / CORBA oder vergleichbares) Der Datenverarbeitungs- und/oder Recheneinheit 24 kann auch ein Schalter 33, ein sog. Switch 33 oder Switching Hub, nachgeordnet sein, welcher die Zieladresse des Datenpaketes (hier die betroffene Steuerung 08 bzw. den Knoten 27) auswertet und das Datenpaket gezielt nur an diese Steuerung weiterleitet.

Zusätzlich zur durchgängigen Verbindung zwischen Datenserver 09 und den einzelnen Steuerungen 08 sind auch logische Verbindungen 32 zwischen den Steuerungen 08 mit "kurzen" logischen Wegen vorgesehen (Querkommunikation). Diese werden für die Kommunikation während der Steuerprozesse genutzt, in welchen keine Jobs vom Datenserver 09 benötigt werden.

Die dargelegte Architektur ermöglicht es nun, die Anlage 01 in einfacher Weise bei der Planung zu konfigurieren bzw. das Steuerungssystem 06 entsprechend der Anlage 01 zu projektieren und die resultierenden Einstellungen und Daten über den Datenserver 09 für den Betrieb zu implementieren. Die Ausführung mit mehreren untergeordneten Datenverarbeitungs- und/oder Recheneinheiten 24 ermöglicht es, die verschiedenen Steuerungen 08 frei und willkürlich an eine dieser Datenverarbeitungs- und/oder Recheneinheit 24 zu koppeln (und ggf. dort diese Information zu hinterlegen). Je nach Auslastung, ggf. bei Störfällen oder aber Erweiterung der Anlage 01 können die Steuerungen 08 den verschiedenen oder einer zu erweiternden Datenverarbeitungs- und/oder Recheneinheit 24 bzw. einem weiteren Prozess 24 zugeordnet werden. Das Konzept ist somit frei nach oben skalierbar. Steht die Anlage 01 in der Planungsphase, so kann bereits bei Projektierung über die Anzahl der untergeordneten Datenverarbeitungs- und/oder Recheneinheiten 24 (Netzhandler 24 z. B. als Arcnet-Handler) sowie die vorgesehene Zuordnung der Steuerungen 08 entschieden werden und diese bereits im File F (bzw. einem gesonderten Konfigurationsfile für die Datenverarbeitungs- und/oder Recheneinheiten 24) berücksichtigt werden. Dem Server 23 oder/und den Netzhandlern 24 wird dann bereits eine Voreinstellung implementiert, welche gleichzeitig in den Netzwerkplänen für die Verbindungen Berücksichtigung findet. Besonders von Vorteil ist es, dass unabhängig von der Vielzahl der Aggregate 02; 03; 04; 05 sämtliche Grundeinstellungen, zur Steuerung benötigte Istwerte und neue Sollwerte einer Sektion in den gemeinsamen Server 23 implementiert bzw. geänderte Daten dort vorgehalten werden. Über die dargelegte Architektur können sowohl Leitebene 41 als auch die untergeordneten Systeme jederzeit auf diesen Datenvorrat zugreifen.

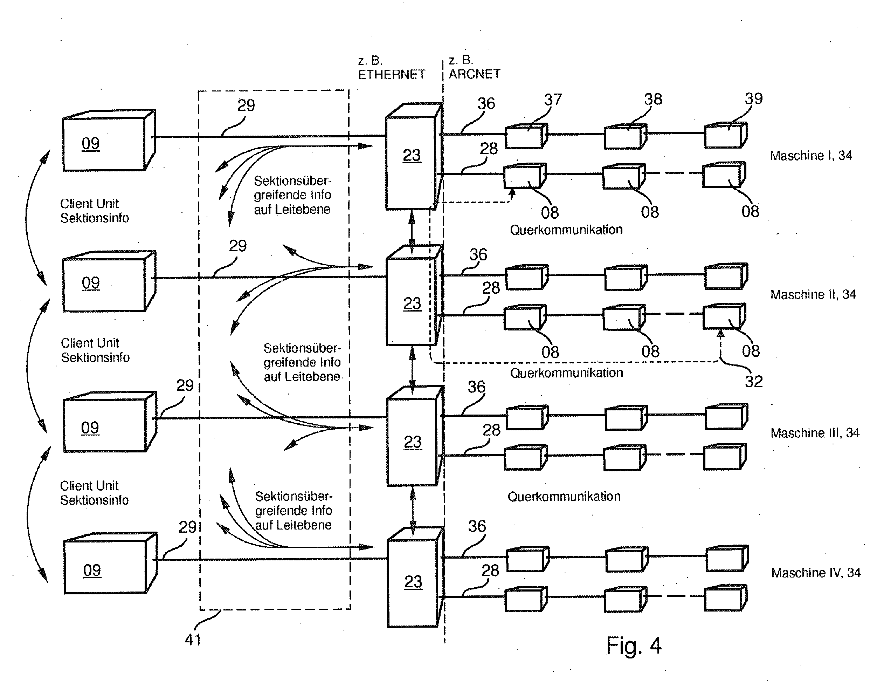

Das genannte Konzept ist, wie in Fig. 4 dargestellt, in einer Weiterbildung auf eine Anlage 01 mit mehreren Sektionen 34, d. h. prinzipiell unabhängig voneinander betreibbaren Maschinen 34, erweiterbar. In dieser Anwendung weist die Anlage 01 mehrere Datenserver 09, z. B. für jede Maschine 34 bzw. Sektion 34 einen, auf. Die Datenserver 09 sind über Netzwerk(e) 29 (im Beispiel Ethernet) mit jeweils einem Kommunikationsserver 23 verbunden. Jedem Kommunikationsserver 23 können weitere, hier nicht dargestellte untergeordnete Datenverarbeitungs- und/oder Recheneinheiten 24 (Netzhandler 24) zugeordnet sein. Die Steuerungen 08 stehen wieder mit dem Kommunikationsserver 23 (direkt oder über untergeordnete Netzhandler 24) über ein Netzwerk 28 in Signalverbindung. Im Beispiel ist ein zweites Netzwerk 36 je Maschine 34 vorgesehen, in welchem weitere steuerungs- und/oder bedienungsrelevante Einrichtungen 37; 38; 39 eingebunden sein können.

Die Datenverarbeitungseinheiten 23 (hier Arcnetserver 23), stehen miteinander zur Kommunikation in Signalverbindung 32. Des weiteren ist vorgesehen, dass ein sektionsübergreifender Informationsaustausch zwischen den verschiedenen Datenservern 09 und den Kommunikationsservern 23 auf einer Leitebene 41 der Anlage stattfindet. Wie im Beispiel nach Fig. 3 ist es weiter vorgesehen, dass auf der Ebene zwischen den Kommunikationsservern 23 und den Steuerungen 08 eine Querkommunikation 32 zwischen den Steuerungen 08, innerhalb einer Sektion 34 und/oder sektionsübergreifend, stattfinden kann.

In Fig. 3 ist oberhalb des Steuersystems 06 symbolisch (strichliert) die Leitebene 41 der Anlage 01 angedeutet. Bestandteil der Leitebene 41 ist ein Leitstand 42, 43, 44, welcher z. B. zumindest eine Rechen- bzw. Datenverarbeitungseinheit 42 (Leitstandsrechner 42), eine Visualisierung 43 (Bildschirm 43) sowie ein Bedienpult 44 aufweist. Der Leitstand 42, 43, 44 dient der Kommunikation des Bedienpersonals mit der Anlage 01 oder einer Sektion 34 der Anlage 01. Der Leitstand 42, 43, 44 bzw. Teile des Leitstandes 42, 43, 44 stehen z. B. über eine offene OPC-Schnittstelle gemäß obiger Ausführungen mit dem Datenserver 23 in Signalverbindung.

Bezugszeichenliste
- 01: Anlage, Druckmaschine, Druckmaschinenanlage
- 02: Aggregat, Materialzuführung, Rollenwechsler
- 02.1: Rollenwechsler
- 02.2: Rollenwechsler
- 02.3: Rollenwechsler
- 03: Aggregat, Druckeinheit, Druckturm
- 04: Aggregat zur Weiterverarbeitung, Falzapparat
- 05: Aggregat, Druckwerk
- 05.1: Druckwerk
- 05.2: Druckwerk
- 05.3: Druckwerk
- 05.4: Druckwerk
- 06: Steuerungssystem
- 07: Verbindung
- 08: Steuerung, Regelung, Kommunikationspartner
- 09: zentralisierte Datenverwaltung, Datenspeicher, Datenserver
- 10: -
- 11: Eingabe-Schnittstelle
- 12: Objekt, Prozessvariable
- 13: Objekt, Prozessvariable
- 13.1: untergeordnetes Objekt, Prozessvariable
- 13.2: untergeordnetes Objekt, Prozessvariable
- 13.2.1: weitere Detaillierung, Prozessvariable
- 13.2.2: weitere Detaillierung, Prozessvariable
- 14: Objekt, Prozessvariable
- 15: Schnittstelle, offen, OPC-Schnittstelle
- 16: Datenverarbeitungseinheit, Computer
- 17: Datenbank
- 18: Programmoberfläche
- 19: Objekte-Vorrat
- 20: Aggregat, Modul, Applikation
- 21: Bildschirmbereich
- 22: Signalverbindung, Netzwerk
- 23: Prozess- oder Recheneinheit, Server, Kommunikationsserver, Prozesseinheit
- 24: untergeordneter Prozess, Datenverarbeitungs- und/oder Recheneinheit, Netzhandler, Server, Prozesseinheit
- 24.1: untergeordneter Prozess, Datenverarbeitungs- und/oder Recheneinheit, Netzhandler, Server
- 24.2: untergeordneter Prozess, Datenverarbeitungs- und/oder Recheneinheit, Netzhandler, Server
- 24.3: untergeordneter Prozess, Datenverarbeitungs- und/oder Recheneinheit, Netzhandler, Server
- 24.4: untergeordneter Prozess, Datenverarbeitungs- und/oder Recheneinheit, Netzhandler, Server
- 25: -
- 26: -
- 27: Schnittstelle, Knoten
- 28: Signalverbindung, Netzwerk, Arcnet
- 29: Signalverbindung, Netzwerk
- 30: -
- 31: Treiber, Programm, Treibersoftware
- 32: logische Verbindung, Querkommunikation
- 33: Schalter, Switch
- 34: Sektion, Maschine
- 35: -
- 36: Netzwerk
- 37: steuerungs-/bedienungsrelevante Einrichtung
- 38: steuerungs-/bedienungsrelevante Einrichtung
- 39: steuerungs-/bedienungsrelevante Einrichtung
- 40: -
- 41: Leitebene
- 42: Rechen- bzw. Datenverarbeitungseinheit, Leitstandsrechner
- 43: Visualisierung, Bildschirm
- 44: Bedienpult

- F: Datensatz, Datei, File, Konfigfile

## Patentansprüche

1. Verfahren zum Einrichten eines Steuerungssystems (06) einer Druckmaschine (01) mit mehreren Aggregaten (02; 03; 04; 05), wobei eine Auswahl an Aggregaten (02; 03; 04; 05) sowie die Aggregate (02; 03; 04; 05) charakterisierende Daten in einer Speichereinheit (17) als Objekte-Vorrat (19) vordefinierter Objekte vorgehalten werden, wobei als die Aggregate (02; 03; 04; 05) charakterisierende Daten Grundeinstellungen, Prozessvariablen (12; 13; 14; 13.1; 13.2; 13.2.1; 13.2.2) und/oder Programmteile vorgehalten werden, wobei
- unter Verwendung einer Software auf einer mit der Speichereinheit (17) verknüpften Programmoberfläche (18) die für die zu projektierende Anlage (01) relevanten Aggregate (02; 03; 04; 05) und ggf. anwählbare spezifische Ausgestaltungen als Objekte aus dem Objekte-Vorrat (19) ausgewählt werden, wobei eine Anwahl bzw. Kopie eines Objektes die spezifischen Daten bzw. Parameter und/oder Unterprogramme und/oder Unterobjekte mit führt,
- durch die Software die die ausgewählten Aggregate (02; 03; 04; 05) und ggf. anwählbare spezifische Ausgestaltungen charakterisierenden Daten zu mindestens einem Datensatz (F; F') aufbereitet werden, wobei als die Aggregate (02; 03; 04; 05) charakterisierende Daten Grundeinstellungen, Prozessvariablen (12; 13; 14; 13.1; 13.2; 13.2.1; 13.2.2) und/oder Programmteile im Datensatz (F; F') auswahlspezifisch mitgeführt werden,
- und schließlich zum Einrichten des Steuerungssystems (06) dieser mindestens eine, die die ausgewählten Aggregate (02; 03; 04; 05) und ggf. anwählbare spezifische Ausgestaltungen charakterisierenden Daten enthaltende Datensatz (F; F') in einem Datenspeicher (09) der Anlage (01) implementiert wird, indem eine an die Anlage (01) speziell angepasste Datenstruktur des Datenspeichers (09) selbst erst unter Verwendung des die Anlage (01) beschreibenden Datensatzes (F; F') geschaffen wird.

2. Verfahren nach Anspruch 1, **dadurch gekennzeichnet, dass** unter Verwendung des die Anlage (01) über die ausgewählten Aggregate (02; 03; 04; 05) und ggf. anwählbare spezifische Ausgestaltungen beschreibenden Datensatzes (F; F') eine speziell an die realisierte Anlage (01) angepasste Datenstruktur im Datenspeicher (09) geschaffen wird.

3. Verfahren nach Anspruch 1 oder 2, **dadurch gekennzeichnet, dass** die Einrichtung der an die projektierte Anlage (01) angepassten Datenstruktur durch ein im Datenspeicher vorgesehenen Programmteil erfolgt.

4. Verfahren nach Anspruch 1, **dadurch gekennzeichnet, dass** bei der Auswahl der Aggregate (02; 03; 04; 05) und ggf. anwählbaren spezifischen Ausgestaltungen aus dem Objekte-Vorrat (19) auch kommunikationsspezifische Informationen zu den betreffenden Aggregaten (02; 03; 04; 05) und/oder zu vorgesehenen Hardware-Komponenten des Steuerungssystems (06) ausgelesen und im folgenden dem Steuerungssystem (06) implementiert werden.

5. Verfahren nach Anspruch 4, **dadurch gekennzeichnet, dass** die kommunikationsspezifischen Informationen durch die Software zu einem vom ersten Datensatz (F) verschiedenen Datensatz (F') aufbereitet werden, und zum Einrichten des Steuerungssystems (06) dieser Datensatz (F') zumindest einem übergeordneten Kommunikationsserver (23) implementiert wird.

6. Verfahren nach Anspruch 1, **dadurch gekennzeichnet, dass** die Auswahl der relevanten Aggregate (02; 03; 04; 05) und ggf. anwählbare spezifische Ausgestaltungen auf einer Programmoberfläche (18) erfolgt.

7. Verfahren nach Anspruch 1 oder 6, **dadurch gekennzeichnet, dass** aus einer Menge an dargestellten, vordefinierten und die Aggregate (02; 03; 04; 05) symbolisierenden Objekten (12; 13; 14) die Anlage (01) im Hinblick auf die zu berücksichtigenden Aggregate (02; 03; 04; 05) durch entsprechende Auswahl der Objekte (12; 13; 14) projektiert, d. h. entsprechend zusammengestellt wird.

8. Verfahren nach Anspruch 7, **dadurch gekennzeichnet, dass** zur Vervielfältigung eines mehrmals zu berücksichtigenden Aggregates (02; 03; 04; 05) das selbe Objekt (12; 13; 14) mehrmals ausgewählt wird.

9. Verfahren nach Anspruch 7, **dadurch gekennzeichnet, dass** zusammen mit den Objekten (12; 13; 14) zumindest diese Objekte (12; 13; 14) charakterisierende Daten, Grundeinstellungen, Prozessvariablen (12; 13; 14; 13.1; 13.2; 13.2.1; 13.2.2) und/oder Programmteile in einen Datensatz (F) übernommen werden.

10. Verfahren nach Anspruch 1 oder 7, **dadurch gekennzeichnet, dass** vordefinierte Grundeinstellungen und/oder Prozessvariablen (12; 13; 14; 13.1; 13.2; 13.2.1; 13.2.2) für die Aggregate (02; 03; 04; 05) bzw. für die die Aggregate (02; 03; 04; 05) repräsentierenden Objekte (12; 13; 14) im Rahmen der Auswahl bei Bedarf geändert werden.

11. Verfahren nach Anspruch 1, **dadurch gekennzeichnet, dass** die die Aggregate (02; 03; 04; 05) charakterisierenden Daten in einer Datenbank (17) vorgehalten werden.

12. Verfahren nach Anspruch 11, **dadurch gekennzeichnet, dass** die in der Datenbank (17) vorgehaltenen Daten bei Anwahl des Objektes (12; 13; 14) nach dem Object Linking and Embedding (OLE) Datenaustauschverfahren oder dem COM / DCOM - Standard in den Datensatz (F; F') übertragen werden.

13. Verfahren nach Anspruch 1, **dadurch gekennzeichnet, dass** der die Anlage (01) beschreibende Datensatz (F) mittels einer vom Steuersystem (06) unabhängiger Datenverarbeitungseinheit (16) erstellt wird.

14. Verfahren nach Anspruch 1, **dadurch gekennzeichnet, dass** der Datensatz (F) über eine Eingabe-Schnittstelle (11) dem Datenspeicher (06) implementiert wird.

15. Verfahren nach Anspruch 1, **dadurch gekennzeichnet, dass** als Datenspeicher (09) ein Datenserver (09) mit Objektverwaltung gemäß COM / DCOM - Standard eingesetzt wird.

## Claims

1. Method for setting up a control system (06) of a printing press (01) comprising a plurality of aggregates (02; 03; 04; 05), a selection of aggregates (02; 03; 04; 05) and data characterizing the aggregates (02; 03; 04; 05) being held in a memory unit (17) as an object stock (19) of predefined objects, basic settings, process variables (12; 13; 14; 13.1; 13.2; 13.2.1; 13.2.2) and/or program parts being held as data characterizing the aggregates (02; 03; 04; 05), wherein
- the aggregates (02; 03; 04; 05) relevant for the installation (01) to be projected and optionally selectable specific configurations being selected as objects from the object stock (19) with the use of software on a program interface (18) linked to the memory unit (17), a selection or copy of an object carrying with it the specific data or parameters and/or subroutines and/or subobjects,
- the data characterizing the selected aggregates (02; 03; 04; 05) and optionally selectable specific configurations are processed by the software to give at least one data record (F; F'), basic settings, process variables (12; 13; 14; 13.1; 13.2; 13.2.1; 13.2.2) and/or program parts being carried in a selection-specific manner as data characterizing the aggregates (02; 03; 04; 05) in the data record (F; F'),
- and finally, for setting up the control system (06), this at least one data record (F; F') containing the data characterizing the selected aggregates (02; 03; 04; 05) and optionally selectable specific configurations is implemented in a data memory (09) of the installation (01) by creating a data structure of the data memory (09) itself, which data structure is specially adapted to the installation (01), with the use of the data record (F; F') describing the installation (01).

2. Method according to Claim 1, **characterized in that** a data structure especially adapted to the installation (01) realised is created in the data memory (09) with the use of the installation (01) via data record (F; F') describing the selected aggregates (02; 03; 04; 05) and optionally selectable specific configurations.

3. Method according to Claim 1 or 2, **characterized in that** the setting up of the data structure adapted to the projected installation (01) is effected by a program part provided in the data memory.

4. Method according to Claim 1, **characterized in that,** when selecting the aggregates (02; 03; 04; 05) and optionally selectable specific configurations from the object stock (19), communication-specific information on the relevant aggregates (02; 03; 04; 05) and/or on intended hardware components of the control system (06) are also read out and are implemented subsequently in the control system (06).

5. Method according to Claim 4, **characterized in that** the communication-specific information is processed by the software to give a data record (F') differing from the first data record (F), and this data record (F') is implemented in at least one master communication server (23) for setting up the control system (06).

6. Method according to Claim 1, **characterized in that** the selection of the relevant aggregates (02; 03; 04; 05) and optionally selectable specific configurations is effected on a program interface (18).

7. Method according to Claim 1 or 6, **characterized in that** the installation (01) is projected, i.e. correspondingly assembled, by appropriate selection of the objects (12; 13; 14) with regard to the aggregates (02; 03; 04; 05) to be taken into account, from a quantity of displayed, predefined objects (12; 13; 14) symbolizing the aggregates (02; 03; 04; 05).

8. Method according to Claim 7, **characterized in that** the same object (12; 13; 14) is selected several times for duplicating an aggregate (02; 03; 04; 05) to be taken into account several times.

9. Method according to Claim 7, **characterized in that,** together with the objects (12; 13; 14), data characterizing at least these objects (12; 13; 14), basic settings, process variables (12; 13; 14; 13.1; 13.2; 13.2.1; 13.2.2) and/or program parts are included in a data record (F).

10. Method according to Claim 1 or 7, **characterized in that** predefined basic settings and/or process variables (12; 13; 14; 13.1; 13.2; 13.2.1; 13.2.2) for the aggregates (02; 03; 04; 05) or for the objects (12; 13; 14) representing the aggregates (02; 03; 04; 05) are modified as required during the selection.

11. Method according to Claim 1, **characterized in that** the data characterizing the aggregates (02; 03; 04; 05) are held in a database (17).

12. Method according to Claim 11, **characterized in that** the data held in the database (17) are transferred to the data record (F; F') during selection of the object (12; 13; 14) by the object linking and embedding (OLE) data exchange method or the COM/DCOM standard.

13. Method according to Claim 1, **characterized in that** the data record (F) describing the installation (01) is created by means of a data processing unit (16) independent of the control system (06).

14. Method according to Claim 1, **characterized in that** the data record (F) is implemented via an input interface (11) for the data memory (06).

15. Method according to Claim 1, **characterized in that** a data server (09) with object administration according to COM/DCOM standard is used as a data memory (09).

## Revendications

1. Procédé de réglage d'un système de commande (06) d'une machine à imprimer (01) dotée de plusieurs agrégats (02 ; 03 ; 04 ; 05), une sélection d'agrégats (02; 03 ; 04 ; 05), ainsi que des données caractérisant les agrégats (02 ; 03 ; 04 ; 05), étant stockées dans une unité de mémoire (17), sous forme de réserve d'objets (19) d'objets prédéfinis, sachant que des réglages de base, des variables de traitement (12 ; 13 ; 14 ; 13.1 ; 13.2 ; 13.2.1 ; 13.2.2) et/ou des parties de programme sont stockés en tant que données caractérisant les agrégats (02 ; 03 04; 05), où
- en utilisant un logiciel sur une interface (18) combinée à l'unité mémoire (17), les agrégats (02 ; 03 ; 04 ; 05) importants pour l'installation (01) à projeter et des modes de réalisation spécifiques, le cas échéant sélectionnables, en tant qu'objets issus de la réserve d'objets (19), sont sélectionnés, une sélection ou une copie d'un objet accompagnant les données ou paramètres et/ou sous-programmes et/ou sous-objets spécifiques,
- les données, caractérisant les agrégats (02 ; 03 ; 04 ; 05) sélectionnés et des modes de réalisation spécifiques, le cas échéant sélectionnables, sont traitées au moyen du logiciel, en donnant au moins un jeu de données (F; F'), sachant que des réglages de base, des variables de traitement (12 ; 13; 14 ; 13.1 ; 13.2 ; 13.2.1 ; 13.2.2) et/ou des parties de programme sont placées, de façon spécifique à la sélection, en tant que données caractérisant les agrégats (02 ; 03 ; 04 ; 05), dans le jeu de données (F ; F'),
- et, enfin, pour régler le système de commande (06), ce au moins un jeu de données (F ; F') contenant des données caractérisant les agrégats (02 ; 03 ; 04 ; 05) sélectionnés et des modes de réalisation spécifiques, le cas échéant sélectionnables, est mis en oeuvre dans une mémoire à données (09) de l'installation (01), en ce qu'une structure de données, spécialement adaptée à l'installation (01), de la mémoire à données (09) elle-même est créée ensuite, en utilisant le jeu de données (F ; F') décrivant l'installation (01).

2. Procédé selon la revendication 1, **caractérisé en ce que**, en utilisant le jeu de données (F ; F') décrivant l'installation (01) par l'intermédiaire des agrégats (02 ; 03 ; 04 ; 05) sélectionnés et des modes de réalisation spécifiques, le cas échéant sélectionnables, est créée dans la mémoire à données (09) une structure de données adaptée spécialement à l'installation (01) réalisée.

3. Procédé selon la revendication 1 ou 2, **caractérisé en ce que** le réglage de la structure de données adaptée à l'installation (01) réalisée est effectué au moyen d'une partie de programme prévue dans la mémoire à données.

4. Procédé selon la revendication 1, **caractérisé en ce que,** lors de la sélection des agrégats (02 ; 03 ; 04 ; 05) et des modes de réalisation spécifiques, le cas échéant sélectionnables, émanant de la réserve d'objets (19), des informations spécifiques à la communication, concernant les agrégats (02 ; 03 ; 04 ; 05) concernés et/ou des composants hardware à prévoir du système de commande (06), sont lus et mis en oeuvre ensuite dans le système de commande (06).

5. Procédé selon la revendication 4, **caractérisé en ce que** les informations spécifiques à la communication sont préparées, au moyen du logiciel, pour donner un jeu de données (F') différent du premier jeu de données (F), et ce jeu de données (F') est mis en oeuvre, au moins dans un serveur de communication (23) hiérarchiquement supérieur, pour régler le système de commande (06).

6. Procédé selon la revendication 1, **caractérisé en ce que** la sélection des agrégats (02 ; 03 ; 04 ; 05) importants et des modes de réalisation spécifiques, le cas échéant sélectionnables, est effectuée sur une interface (18).

7. Procédé selon la revendication 1 ou 6, **caractérisé en ce que,** à partir d'une quantité d'objets (12 ; 13 ; 14) représentés, prédéfinis et symbolisant les agrégats (02 ; 03 ; 04 ; 05), l'installation (01) est projetée, c'est-à-dire constituée de manière correspondante, eu égard aux agrégats (02 ; 03 ; 04 ; 05) à prendre en considération, au moyen d'une sélection correspondante des objets (12 ; 13 ; 14).

8. Procédé selon la revendication 7, **caractérisé en ce que,** pour effectuer une multiplication d'un agrégat (02 ; 03 ; 04 ; 05) à prendre en considération plusieurs fois, on procède à une sélection à plusieurs reprises du même objet (12 ; 13 ; 14).

9. Procédé selon la revendication 7, **caractérisé en ce que,** conjointement avec les objets (12 ; 13 ; 14), il est procédé à une prise en charge, dans un jeu de données (F), de données, de réglages de base, de variables de traitement (12 ; 13 ; 14 ; 13.1 ; 13.2 ; 13.2.1 ; 13.2.2) et/ou de parties de programme caractérisant au moins ces objets (12 ; 13 ; 14).

10. Procédé selon la revendication 1 ou 7, **caractérisé en ce que** des réglages de base et/ou des variables de traitement (12 ; 13 ; 14 ; 13.1 ; 13.2 ; 13.2.1 ; 13.2.2) pour les agrégats (02 ; 03 ; 04 ; 05), ou pour les objets (12 ; 13 ; 14) représentant les agrégats (02 ; 03 ; 04 ; 05), sont modifiés en cas de besoin, dans le cadre de la sélection.

11. Procédé selon la revendication 1, **caractérisé en ce que** les données caractérisant les agrégats (02 ; 03 ; 04 ; 05) sont stockées dans une banque de données (17).

12. Procédé selon la revendication 11, **caractérisé en ce que** les données stockées dans la banque de données (17), en cas de sélection de l'objet (12 ; 13 ; 14), sont transmises dans le jeu de données (F ; F') selon le procédé d'échange de données Object Linking and Embedding (OLE) ou le standard COM/DCOM.

13. Procédé selon la revendication 1, **caractérisé en ce que** le jeu de données (F) décrivant l'installation (01) est établi au moyen d'une unité de traitement de données (16) indépendante du système de commande (06).

14. Procédé selon la revendication 1, **caractérisé en ce que** le jeu de données (F) est mis en oeuvre dans la mémoire à données (06) par l'intermédiaire d'une interface d'entrée (11).

15. Procédé selon la revendication 1, **caractérisé en ce que** l'on utilise comme mémoire à données (09) un serveur de données (09) avec gestion d'objets selon le standard COM/DCOM.
